(19) Europäisches Patentamt
European Patent Office
Office européen des brevets

(11) **EP 2 849 522 B1**

(12) **EUROPÄISCHE PATENTSCHRIFT**

(45) Veröffentlichungstag und Bekanntmachung des Hinweises auf die Patenterteilung:
**18.11.2015 Patentblatt 2015/47**

(51) Int Cl.:
***H04W 74/08*** *(2009.01)*

(21) Anmeldenummer: **13184622.2**

(22) Anmeldetag: **16.09.2013**

(54) **Verfahren zum Senden von Nachrichten in Ad-hoc-Netzwerken**

Method for transmitting messages in ad hoc networks

Procédé d'envoi de messages dans des réseaux ad-hoc

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.03.2015 Patentblatt 2015/12**

(73) Patentinhaber: **Kapsch TrafficCom AG**
**1120 Wien (AT)**

(72) Erfinder: **Güner, Refi-Tugrul**
**2500 Baden (AT)**

(74) Vertreter: **Weiser, Andreas**
**Patentanwalt**
**Kopfgasse 7**
**1130 Wien (AT)**

(56) Entgegenhaltungen:
**WO-A2-2007/054874     US-A1- 2012 182 867**

• **YONGTAE PARK ET AL: "Collision Control of Periodic Safety Messages With Strict Messaging Frequency Requirements", IEEE TRANSACTIONS ON VEHICULAR TECHNOLOGY, IEEE SERVICE CENTER, PISCATAWAY, NJ, US, Bd. 62, Nr. 2, 1. Februar 2013 (2013-02-01), Seiten 843-852, XP011493723, ISSN: 0018-9545, DOI: 10.1109/TVT.2012.2227070**
• **ALONSO A ET AL: "Throughput of Self-Organizing Time Division Multiple Access MAC Layer for Vehicular Networks Based on Measured SNR Time-Series", VEHICULAR TECHNOLOGY CONFERENCE (VTC FALL), 2011 IEEE, IEEE, 5. September 2011 (2011-09-05), Seiten 1-5, XP032029503, DOI: 10.1109/VETECF. 2011.6093019 ISBN: 978-1-4244-8328-0**
• **TIAN DAXIN ET AL: "A Self-Adaptive V2V Communication System with DSRC", 2013 IEEE INTERNATIONAL CONFERENCE ON GREEN COMPUTING AND COMMUNICATIONS AND IEEE INTERNET OF THINGS AND IEEE CYBER, PHYSICAL AND SOCIAL COMPUTING, IEEE, 20. August 2013 (2013-08-20), Seiten 1528-1532, XP032530828, DOI: 10.1109/GREENCOM-ITHINGS-CPSCOM.2013.271 [gefunden am 2013-12-11]**

**Beschreibung**

Die vorliegende Erfindung betrifft ein Verfahren zum drahtlosen Senden und Empfangen von Nachrichten in einem asynchronen Ad-hoc-Netzwerk mit einer Mehrzahl von Netzknoten, von denen zumindest ein Netzknoten periodisch Nachrichten mit einer vorgegebenen Periodendauer sendet. Die Erfindung betrifft ferner einen Netzknoten für ein solches Verfahren.

Solche Ad-hoc-Netzwerke werden z.B. in der Fahrzeug-zu-Fahrzeug- (vehicle-to-vehicle, V2V) bzw. Fahrzeug-zu-Infrastruktur- (vehicle-to-infrastructure, V2I) -Kommunikation eingesetzt; sie sind sehr flexibel und aufgrund der Vermaschung der Netzknoten ausfallsicher. Andererseits kommt es, da jeder Netzknoten das Senden von Nachrichten anhand seiner eigenen internen Taktung auslöst, zu Kollisionen, wenn zwei oder mehr Netzknoten gleichzeitig Nachrichten zu senden versuchen. Deshalb sind Verfahren zur Kollisionserkennung (Collision Detection, CD) bzw. Kollisionsvermeidung (Collision Avoidance, CA) für solche Netzwerke mit Mehrfachzugriff und Trägerprüfung (Carrier Sense Multiple Access, CSMA) standardisiert. Insbesondere im Fall einer großen Zahl von Netzknoten und/oder Nachrichten reichen diese Verfahren jedoch nicht aus: die Zahl der erfolgreich gesendeten Nachrichten und damit die Effizienz des Netzwerks sinkt dann bei steigender Nachrichtenanzahl.

Um dem entgegenzuwirken, sind aus der Literatur verschiedene Verbesserungen bekannt. In G. Bansal et al., "Cross-Validation of DSRC Radio Testbed and NS-2 Simulation Platform for Vehicular Safety Communications", 2011 IEEE Vehicular Technology Conference (VTC Fall), wird vorgeschlagen, die Sendeleistung der Netzknoten zu reduzieren oder die Periodendauer periodisch zu sendender Nachrichten zu verlängern, um weniger Kollisionen zu erzeugen. Dadurch sinkt jedoch einerseits die Anzahl der direkt miteinander in Verbindung stehenden Netzknoten eines Ad-hoc-Netzwerks, sodass Nachrichten nicht mehr direkt ("single-hop") gesendet werden können, sondern über mehrere zwischenliegende Netzknoten geroutet werden müssen ("multi-hop"), was die Gesamtanzahl gesendeter Nachrichten weiter erhöht; andererseits wird dadurch die Ausbreitungsgeschwindigkeit von Informationen herabgesetzt, was insbesondere bei wichtigen Nachrichten, z.B. über Gefahrensituationen oder Unfälle, unerwünscht ist.

In S. Sundar et al., "Congestion Control for Vehicular Safety: Synchronous and Asynchronous MAC Algorithms", VANET'12 Conference, June 25, 2012, UK, wird im Gegensatz dazu vorgeschlagen, die Netzknoten zu synchronisieren, wozu ein aufwändiger Synchronisier-Algorithmus, der auch das Hinzukommen oder Wegfallen einzelner Netzknoten im gesamten Ad-hoc-Netzwerk handhaben muss, und eine präzise gemeinsame Zeitbasis von je einem GPS-Empfänger in jedem Netzknoten erforderlich sind. Es versteht sich, dass ein solches Verfahren nur funktioniert, wenn alle beteiligten Netzknoten des Ad-hoc-Netzwerks lückenlos synchronisiert sind, d.h. bei vollständiger Durchdringung des Ad-hoc-Netzwerks mit solchen Netzknoten.

In Y. Park et al., "Collision Control of Periodic Safety Messages with Strict Messaging Frequency Requirements", IEEE Transactions on Vehicular Technology, Bd. 62, Nr. 2, Februar 2013, wird ein IEEE 802.11p Netzwerk beschrieben, bei dem BSM Kollisionen dadurch vermieden werden, dass sich jede BSM Anwendung in jedem Knoten ein eigenes Bild über die Zeitschlitze macht und dann den Zeitschlitz für die BSM Übertragung dynamisch ändert auf Basis der beobachteten Nutzung der Zeitschlitze durch andere Knoten.

Die Erfindung setzt sich zum Ziel, ein Verfahren und einen Netzknoten zum drahtlosen Senden und Empfangen von Nachrichten in einem asynchronen Ad-hoc-Netzwerk zu schaffen, welches auch bei einer hohen Anzahl von Netzknoten bzw. Nachrichten ein effizientes Senden erlaubt, ohne dabei den Aufwand und die vollständige Durchdringung einer Synchronisierung zu erfordern.

Gemäß einem ersten Aspekt der Erfindung wird das Ziel mit einem Verfahren zum drahtlosen Senden und Empfangen von Nachrichten in einem asynchronen Ad-hoc-Netzwerk mit einer Mehrzahl von Netzknoten erreicht, von denen zumindest ein erster Netzknoten periodisch Nachrichten mit einer vorgegebenen Periodendauer sendet, welches sich auszeichnet durch die folgenden, in einem zweiten Netzknoten ausgeführten Schritte:

Festlegen zumindest zweier aufeinanderfolgender Zeitintervalle mit jeweils der Länge einer Periodendauer, von denen ein erstes Zeitintervall in der Vergangenheit und ein zweites Zeitintervall in der Zukunft liegt, und Unterteilen der Zeitintervalle in jeweils zumindest zwei Zeitschlitze;
Berechnen eines Belegungsmaßes für jeden Zeitschlitz des ersten Zeitintervalls anhand der Anzahl von in diesem Zeitschlitz empfangenen Nachrichten eines oder mehrerer anderer Netzknoten;
Ermitteln des Zeitschlitzes mit dem geringsten Belegungsmaß; und
Senden zumindest einer Nachricht in einem dem ermittelten Zeitschlitz entsprechenden Zeitschlitz des zweiten Zeitintervalls.

Der Erfindung liegt die Erkenntnis zugrunde, dass sich in Folge der im allgemeinen gleichen Periodendauer periodisch zu sendender Nachrichten verschiedener Netzknoten - z.B. werden Common Awareness Messages (CAM) oder Basic Safety Messages (BSM) gemäß den Standards ITS-G5 oder WAVE typisch alle 100 ms bis 500 ms gesendet - eine hohe Folgekollisionsgefahr daraus ergibt, dass zwei Netzknoten, deren Nachrichten bereits zuvor kollidiert sind, nach Ablauf der jeweils gleichen Periodendauern wieder gleichzeitig zu senden versuchen.

Das erfindungsgemäße Verfahren nutzt Zeitschlitze, die anhand der Beobachtung der Vergangenheit auch in Zukunft mit hoher Wahrscheinlichkeit frei sind, zum Senden von Nachrichten und vermeidet auf diese Weise Kollisionen mit Nachrichten anderer Netzknoten. Sendeleistung und Periodendauer bleiben dabei unberührt, sodass die Effizienz nicht leidet. Da die Netzknoten voneinander unabhängig bleiben, ist das Verfahren gleichermaßen vorteilhaft in einem Ad-hoc-Netzwerk anwendbar, in welchem es von allen, einigen oder auch keinen anderen Netzknoten angewendet wird. Dabei nimmt jeder Netzknoten für sich - ohne aufwändige Synchronisation aller Netzknoten des Ad-hoc-Netzwerks - eine Pseudo-Synchronisation mit dem Netzwerk vor.

Besonders günstig ist es, wenn die Empfangssignalstärken der empfangenen Nachrichten gemessen werden und beim Berechnen des Belegungsmaßes jede empfangene Nachricht mit ihrer Empfangssignalstärke gewichtet gezählt wird. Dadurch gehen entferntere Netzknoten in das Berechnen des Belegungsmaßes weniger stark ein, sodass insbesondere bei sehr hoher Belegung der Zeitintervalle anhand des Belegungsmaßes Zeitschlitze mit geringerer Kollisionsgefahr ermittelt werden. Ein Netzknoten kann dabei sogar während des Empfangs einer Nachricht geringer Empfangssignalstärke dennoch seine Nachricht senden, welche von benachbarten Netzknoten störungsfrei empfangbar ist.

In einer einfachen Ausführungsform der Erfindung ist die Periodendauer für das ganze Ad-hoc-Netzwerk definiert. Alternativ kann die Periodendauer anhand der vom ersten Netzknoten empfangenen Nachrichten gemessen werden. So passt sich der zweite Netzknoten an die Periodendauer des ersten Netzknotens an; das Verfahren ist dabei robuster gegenüber Netzknoten mit unterschiedlicher vorgegebener Periodendauer. Besonders vorteilhaft ist es dabei, wenn als erster Netzknoten jener Netzknoten des Ad-hoc-Netzwerks gewählt wird, der die geringste Relativgeschwindigkeit zum zweiten Netzknoten hat. So passt sich der zweite Netzknoten an einen Netzknoten an, von dem zu erwarten ist, dass dessen Nachrichten über längere Zeit gleichmäßig empfangen werden.

Da die periodischen Nachrichten in den betrachteten Ad-hoc-Netzwerken bei einer typischen Periodendauer von 100 ms bis 500 ms meist eine Dauer von etwa 0,5 bis 1 ms haben, führt es zu einer günstigen Auflösung, wenn die Zeitintervalle jeweils in 10 bis 500, bevorzugt 20 bis 100 Zeitschlitze unterteilt werden.

Besonders vorteilhaft ist es, wenn empfangene Nachrichten mit einem Zeitstempel einer Timing Synchronization Function (TSF) gemäß dem Standard IEEE 802.11 oder einem damit kompatiblen Standard versehen werden und das Senden von Nachrichten darauf synchronisiert wird. So wird ein bereits vorhandener Zeitgeber genutzt, der standardgemäß sogar einen Abgleich mit Timing Synchronization Functions anderer Netzknoten durchführt und empfangene Nachrichten direkt in der im Standard IEEE 802.11 beschriebenen MAC-Subschicht des OSI-Schichtenmodells und somit praktisch verzögerungsfrei zeitstempeln kann. Zugleich erlaubt die Timing Synchronization Function ein mit dem Empfangen synchronisiertes Senden der Nachrichten, sodass ein separater zweiter Zeitgeber für das Auslösen des Sendens entfällt und es zu keinen Abweichungen zwischen zwei Zeitgebern eines Netzknotens kommen kann.

Bevorzugt werden als die genannten periodischen Nachrichten Common Awareness Messages (CAM), Basic Safety Messages (BSM), Traveler Information Messages (TIM) und/oder Decentralized Environmental Notification Messages (DENM) nach dem ITS-G5-, WAVE- oder einem damit kompatiblen Standard gesendet. Das erfindungsgemäße Verfahren bedarf somit bei seiner Pseudo-Synchronisation keiner weiteren, die Belegung erhöhenden Nachrichten und ist auch deshalb mit herkömmlichen, standardkonformen Netzknoten vollständig kompatibel.

In einem zweiten Aspekt schafft die Erfindung einen Netzknoten für ein asynchrones Ad-hoc-Netzwerk mit einer Mehrzahl von Netzknoten, von denen zumindest ein Netzknoten periodisch Nachrichten mit einer vorgegebenen Periodendauer sendet, umfassend:

einen Sendeempfänger zum drahtlosen Senden und Empfangen von Nachrichten;
einen mit dem Sendeempfänger verbundenen Prozessor, der dafür ausgebildet ist,

- zumindest zwei aufeinanderfolgende Zeitintervalle mit jeweils der Länge einer Periodendauer festzulegen, von denen ein erstes Zeitintervall in der Vergangenheit und ein zweites Zeitintervall in der Zukunft liegt, und die Zeitintervalle in jeweils zumindest zwei Zeitschlitze zu unterteilen,
- ein Belegungsmaß für jeden Zeitschlitz des ersten Zeitintervalls anhand der Anzahl von in diesem Zeitschlitz über den Sendeempfänger empfangenen Nachrichten eines oder mehrerer anderer Netzknoten zu berechnen,
- den Zeitschlitz mit dem geringsten Belegungsmaß zu ermitteln, und
- zumindest eine Nachricht in einem dem ermittelten Zeitschlitz entsprechenden Zeitschlitz des zweiten Zeitintervalls über den Sendeempfänger zu senden.

Bezüglich der Vorteile und weiterer bevorzugter Ausführungsformen des erfindungsgemäßen Netzknotens wird auf die vorangegangenen Ausführungen zum Verfahren verwiesen.

Die Erfindung wird nachfolgend anhand eines in den beigeschlossenen Zeichnungen dargestellten Ausführungsbeispiels näher erläutert. In den Zeichnungen zeigen:

Fig. 1 ein asynchrones Ad-hoc-Netzwerk mit einer Mehrzahl von Netzknoten in schematischer Draufsicht;

die Fig. 2a und 2b beispielhafte Zeitintervalle und darin empfangene Nachrichten ohne (Fig. 2a) und mit (Fig. 2b) Unterteilung in Zeitschlitze gemäß der Erfindung als Empfangssignalstärke/Zeit-Diagramm; und

Fig. 3 einen erfindungsgemäßen Netzknoten mit Ausschnitten eines OSI-Schichtenmodells in einem schematischen Blockschaltbild mit Signalflüssen.

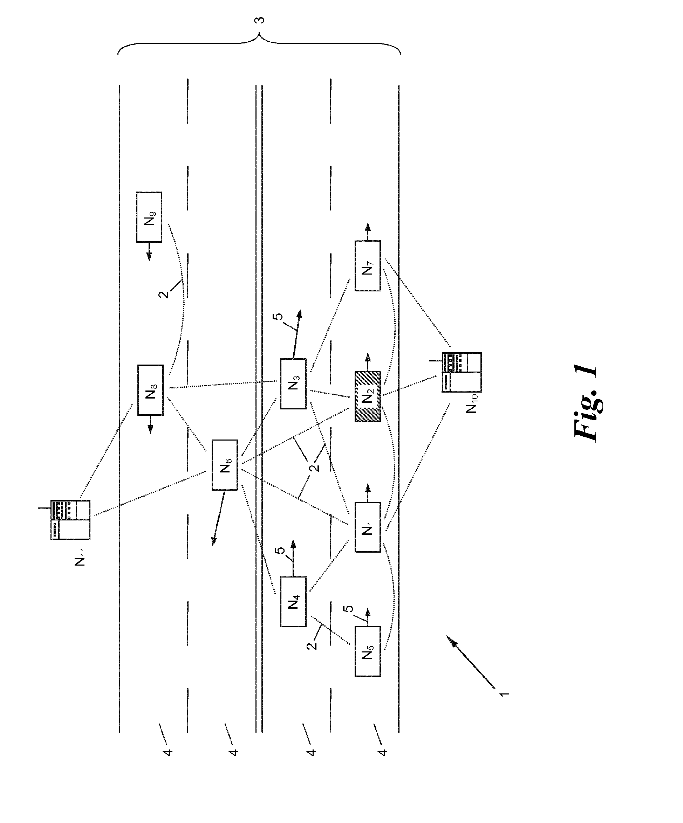

Gemäß Fig. 1 kommunizieren in einem asynchronen Ad-hoc-Netzwerk 1 mehrere Netzknoten $N_1$, $N_2$, ..., allgemein $N_i$, über Kurzreichweiten-Funkverbindungen 2 miteinander. Einige der Netzknoten $N_1$ sind ortsbeweglich, z.B. Fahrzeuge auf einer Fahrbahn 3 mit Fahrstreifen 4, auf welchen sich die Fahrzeuge bzw. Netzknoten $N_1$ bis $N_9$ jeweils mit einer Geschwindigkeit in einer Richtung, d.h. gemäß einem Geschwindigkeitsvektor 5, fortbewegen. Andere Netzknoten $N_{10}$, $N_{11}$ sind stationär, z.B. seitlich oder oberhalb der Fahrbahn 3 angebracht.

Entsprechend dem Wesen eines Ad-hoc-Netzwerks 1 werden die Kurzreichweiten-Funkverbindungen 2 dynamisch gebildet bzw. beendet, wenn zwei Netzknoten $N_i$ in die Funkreichweite des jeweils anderen eintreten bzw. diese verlassen.

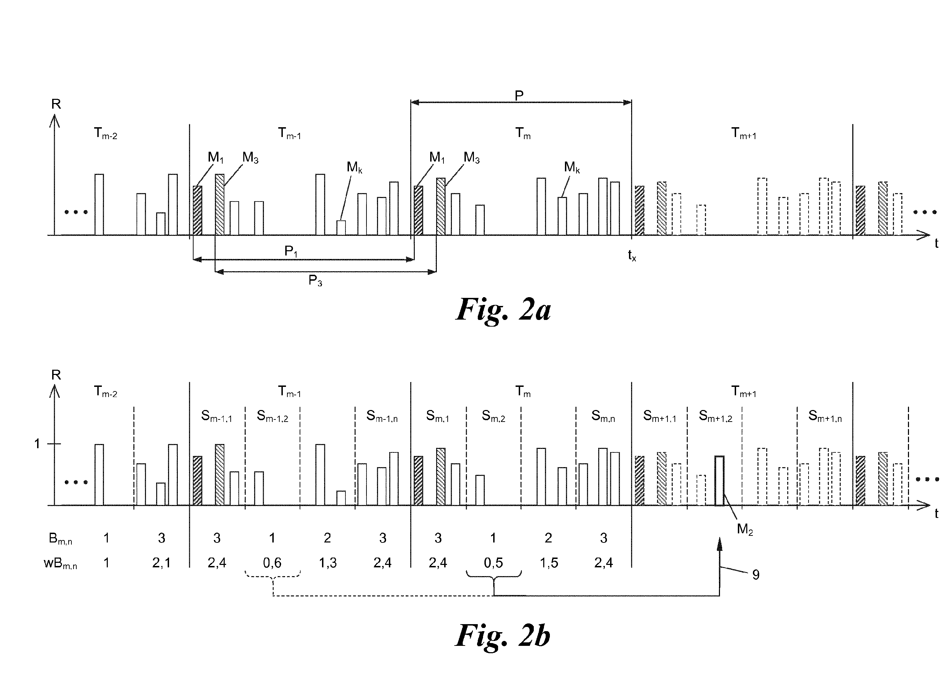

Nach Fig. 2a senden und empfangen die Netzknoten $N_1$ von Fig. 1 Nachrichten $M_1$, $M_2$, ..., allgemein $M_i$, über die Funkverbindungen 2 an bzw. von jeweils in ihrer Funkreichweite liegende(n) andere(n) Netzknoten $N_i$. Die Nachrichten $M_i$ können periodisch oder einmalig sein; so sendet ein erster Netzknoten $N_1$ gemäß den Beispielen der Fig. 1 und 2a periodisch Nachrichten $M_1$ mit einer vorgegebenen Periodendauer $P_1$ von z.B. 100 ms, welche von den Netzknoten $N_2$ bis $N_6$ und $N_{10}$ empfangen werden. Ein Netzknoten $N_3$ sendet periodisch Nachrichten $M_3$ mit einer vorgegebenen Periodendauer $P_3$, die in diesem Beispiel der Periodendauer $P_1$ des Netzknotens $N_1$ entspricht, und welche z.B. in den Netzknoten $N_1$, $N_2$ und $N_6$ bis $N_8$ empfangen werden, usw. usf.

Die periodisch gesendeten Nachrichten $M_i$ der Netzknoten $N_i$ können beispielsweise Common Awareness Messages (CAM), Basic Safety Messages (BSM), Traveller Information Messages (TIM) oder Decentralized Environmental Notification Messages (DENM) nach dem ITS-G5-, WAVE- oder einem damit kompatiblen Standard sein; einmalige Nachrichten $M_i$ werden jeweils durch ein spezifisches, in einem Netzknoten $N_i$ detektiertes Ereignis, z.B. einen Verkehrsunfall, ausgelöst.

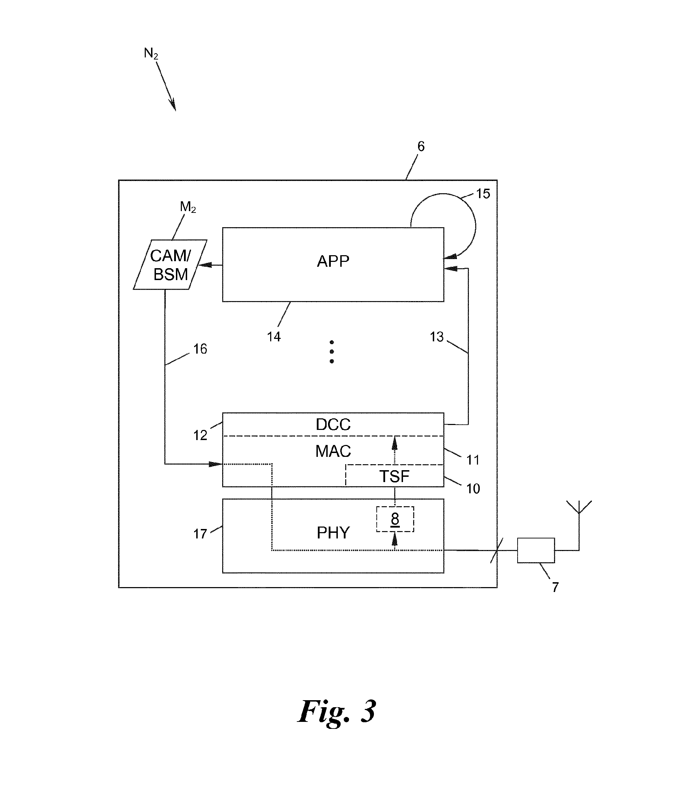

Gemäß Fig. 3 verfügen ein oder mehrere Netzknoten $N_i$, hier der zweite Netzknoten $N_2$, über einen Prozessor 6, einen damit verbundenen Sendeempfänger 7 zum Senden und Empfangen der Nachrichten $M_i$ und eine mit beiden verbundene Messeinrichtung 8 zur Messung der Empfangssignalstärken $R_1$, $R_3$, ..., allgemein $R_k$, von empfangenen Nachrichten $M_i$, $M_3$, ..., allgemein $M_k$, anderer Netzknoten $N_1$, $N_3$, ..., allgemein $N_k$, welche in den Fig. 2a und 2b als Empfangssignalstärke R über der Zeit t aufgetragen sind. Zur Minimierung der Kollisionsgefahr der von ihm gesendeten Nachrichten $M_2$ mit von den anderen Netzknoten $N_k$ empfangenen Nachrichten $M_k$ führt der hier betrachtete zweite Netzknoten $N_2$ das folgende Verfahren aus.

Gemäß dem Beispiel von Fig. 2a werden im zweiten Netzknoten $N_2$ vom Prozessor 6 zumindest zwei aufeinanderfolgende Zeitintervalle $T_m$, $T_{m+1}$ mit jeweils der Länge einer Periodendauer P festgelegt, wobei zum Zeitpunkt $t_x$ der Festlegung bzw. Betrachtung das erste Zeitintervall $T_m$ in der Vergangenheit und das zweite Zeitintervall $T_{m+1}$ in der Zukunft liegt. Die Länge der Periodendauer P kann dabei für das ganze Ad-hoc-Netzwerk 1 definiert sein und somit für jeden Netzknoten $N_i$ gleichermaßen gelten, sodass die einzelnen, in den jeweiligen Netzknoten $N_i$ eingehaltenen Periodendauern $P_1$, $P_2$, ..., allgemein $P_i$, lediglich aufgrund unterschiedlicher lokaler Taktung in den Netzknoten $N_i$ voneinander und von der definierten Periodendauer P geringfügig abweichen; alternativ kann - wie im Beispiel von Fig. 2a - der zweite Netzknoten $N_2$ die Periodendauer P anhand einer von ihm gemessenen Periodendauer $P_k$ der von einem anderen Netzknoten $N_k$ ("Referenz-Netzknoten") empfangenen Nachrichten $M_k$ messen, hier z.B. der Periodendauer $P_1$ des ersten Netzknotens $N_1$. Als Referenz-Netzknoten $N_1$ wird bevorzugt jener Netzknoten $N_k$ des Ad-hoc-Netzwerks 1 gewählt, der die geringste Relativgeschwindigkeit zum zweiten Netzknoten $N_2$ hat, d.h. dessen Geschwindigkeitsvektor 5 jenem des zweiten Netzknotens $N_2$ am ähnlichsten ist.

Die Relativgeschwindigkeit kann dabei aus den jeweiligen Angaben über Position, Bewegungsrichtung und -geschwindigkeit z.B. der CAM- oder BSM-Nachricht der anderen Netzknoten $N_k$ entnommen werden oder anhand der Empfangssignalstärken $R_k$ der von den anderen Netzknoten $N_k$ empfangenen Nachrichten $M_k$ und ihrer zeitlichen Veränderungen über zumindest zwei vergangene Zeitintervalle ..., $T_{m-2}$, $T_{m-1}$, $T_m$ bestimmt werden. So ändern sich im Beispiel von Fig. 2a die Empfangssignalstärken $R_1$, $R_3$ der von den Netzknoten $N_1$, $N_3$ empfangenen Nachrichten $M_1$, $M_3$ über mehrere vergangene Zeitintervalle ..., $T_{m-2}$, $T_{m-1}$, $T_m$ kaum, wogegen die Empfangssignalstärke $R_k$ der in Fig. 2a mit $M_k$ bezeichneten Nachricht vom Zeitintervall $T_{m-1}$ zum anschließenden Zeitintervall $T_m$ deutlich anwächst und in dem diesen vorangegangenen Zeitintervall $T_{m-2}$ noch gar keine Nachricht $M_k$ des Netzknotens $N_k$ empfangen wurde.

Gemäß den Fig. 2b und 3 werden die vom Prozessor 6 des Netzknotens $N_2$ festgelegten Zeitintervalle $T_m$ in jeweils zumindest zwei, typisch in fünf bis hundert, bevorzugt zehn bis zwanzig - gemäß dem Beispiel in Fig. 2b in vier - Zeitschlitze $S_{m,1}$, $S_{m,2}$, ..., allgemein $S_{m,n}$, unterteilt. Es versteht sich, dass die Zeitschlitze $S_{m,n}$ in einem Zeitintervall $T_m$ auch unterschiedlich groß gewählt werden können.

Anschließend wird für jeden Zeitschlitz $S_{m,n}$ des ersten Zeitintervalls $T_m$ ein Belegungsmaß $B_{m,n}$ anhand der Anzahl von in diesem Zeitschlitz $S_{m,n}$ empfangenen Nachrichten $M_k$ der anderen Netzknoten $N_k$ berechnet zu:

$$B_{m,n} = \sum_k M_k(S_{m,n})$$

Vom Netzknoten $N_2$ selbst ausgesendete Nachrichten $M_2$ können dabei unberücksichtigt bleiben.

Optional kann der Prozessor 6 beim Berechnen des Belegungsmaßes jede empfangene Nachricht $M_k$ mit ihrer Empfangssignalstärke $R_k$ gewichtet zählen, um ein gewichtetes Belegungsmaß $wB_{m,n}$ zu erzeugen, in das empfangene Nachrichten $M_k$ mit geringerer Empfangssignalstärke $R_k$ geringer eingehen:

$$wB_{m,n} = \sum_k R_k \cdot M_k(S_{m,n})$$

Auch könnte das Belegungsmaß $B_{m,n}$ bzw. das gewichtete Belegungsmaß $wB_{m,n}$ über die jeweils n-ten Zeitschlitze ..., $S_{m-2,n}$, $S_{m-1,n}$, $S_{m,n}$ zweier oder mehrerer vergangener Zeitintervalle ..., $T_{m-2}$, $T_{m-1}$, $T_m$ gemittelt werden.

Für das Zeitintervall $T_m$ wird nun der Zeitschlitz $S_{m,n}$ mit dem geringsten Belegungsmaß $B_{m,n}$ bzw. $wB_{m,n}$ gesucht. Im Beispiel von Fig. 2b ist dies der Zeitschlitz $S_{m,2}$.

Anschließend sendet der zweite Netzknoten $N_2$ zumindest eine Nachricht $M_2$ in einem dem so ermittelten Zeitschlitz $S_{m,2}$ des vergangenen ("ersten") Zeitintervalls $T_m$ entsprechenden Zeitschlitz $S_{m+1,2}$ des zweiten Zeitintervalls $T_{m+1}$ oder startet bzw. verschiebt ein periodisches Senden von Nachrichten $M_2$ in diesem bzw. in diesen Zeitschlitz $S_{m+1,2}$, wie dies Pfeil 9 in Fig. 2b symbolisiert.

Dies beruht auf der Annahme bzw. dem Erwartungswert, dass - weil viele der Nachrichten $M_i$ im Ad-hoc-Netzwerk 1 periodisch gesendet werden - den im Zeitintervall $T_m$ empfangenen Nachrichten $M_k$ entsprechende Nachrichten $M_k$ im anschließenden Zeitintervall $T_{m+1}$ folgen, und zwar jeweils in den gleichen, den Zeitschlitzen $S_{m,n}$ des Zeitintervalls $T_m$ entsprechenden Zeitschlitzen $S_{m+1,n}$ des Intervalls $T_{m+1}$, wie in Fig. 2b strichliert gezeigt. Dabei könnte der Zeitschlitz $S_{m+1,n}$ des zweiten Zeitintervalls $T_{m+1}$ zum Senden der Nachricht $M_2$ alternativ auch auf der Grundlage eines länger vergangenen Zeitintervalls ..., $T_{m-2}$, $T_{m-1}$, z.B. ausgehend von einem ermittelten Zeitschlitz $S_{m-1,2}$ des Zeitintervalls $T_{m-1}$, bestimmt werden.

Falls gewünscht, kann ferner zumindest ein Zeitschlitz $S_{m,n}$ in jedem Zeitintervall $T_m$ für andere Dienste oder besonders priorisierte Nachrichten $M_i$ zwingend freigehalten werden.

In einer praktischen Ausführungsform, wie sie in Fig. 3 gezeigt ist, versieht der Prozessor 6 jede empfangene Nachricht $M_k$ beim Empfang mit einem aktuellen Zeitstempel einer Timing Synchronization Function (TSF) 10, welche gemäß dem Standard IEEE 802.11 oder einem damit kompatiblen Standard, z.B. dem Standard IEEE 802.11p für Ad-hoc-Netzwerke 1 intelligenter Verkehrssysteme, in der MAC-Subschicht 11 des OSI-Schichtenmodells angeordnet ist. So können empfangene Nachrichten $M_k$ jederzeit den dort gebildeten Zeitschlitzen $S_{m,n}$ zugeordnet werden. Alternativ könnte der Prozessor 6 empfangene Nachrichten $M_k$ auch anhand eines anderen Zeitgebers mit Zeitstempel versehen.

Über ein in den genannten Standards ebenfalls beschriebenes Decentralized Congestion Control (DCC) Modul 12 der MAC-Subschicht 11 werden die mit Zeitstempel versehenen Nachrichten $M_k$ über einen Pfad 13 zur Verarbeitung bis zur Anwendungsschicht (APP) 14 weitergereicht.

Ferner synchronisiert der Prozessor 6 gemäß Fig. 3 das Senden der zumindest einen Nachrichten $M_2$ auf die Taktung der Timing Synchronization Function 10, wobei die Anwendungsschicht 14 auf den Zeitschlitz $S_{m+1,2}$ wartet (15). Durch Übergabe der Nachricht $M_2$, z.B. einer CAM- oder BSM-Nachricht, an die MAC-Subschicht 11, siehe Pfad 16, und eine gemäß OSI-Schichtenmodell darunterliegende physikalische Schicht (PHY) 17 löst der Prozessor 6 deren Senden aus, und zwar zu dem auf Basis der Timing Synchronization Funktion 10 angegebenen Zeitpunkt des Zeitschlitzes $S_{m+1,2}$ des zukünftigen ("zweiten") Zeitintervalls $T_{m+1}$. Die beiden Schichten MAC 11 und PHY 17 senden standardgemäß die übergebene Nachricht $M_2$ ehest möglich, d.h. wenn keine weiteren Nachrichten $M_i$ empfangen wird, über den Sendeempfänger 7 des Netzknotens $N_2$.

Sollte es beim Senden dennoch zu einer Kollision mit einer Nachricht $M_k$ eines anderen Netzknotens $N_k$ kommen, z.B. weil im ersten Zeitintervall $T_m$ dieser Netzknoten $N_k$ nicht im Empfangsbereich des zweiten Netzknotens $N_2$ war oder eine zusätzliche Nachricht $M_k$ sendet, so laufen die für Netzwerke 1 mit Mehrfachzugriff und Trägerprüfung (Carrier Sense Multiple Access, CSMA) bekannten Mechanismen der Kollisionserkennung (Collision Detection, CD) bzw. Kollisionsvermeidung (Collision Avoidance, CA) ab.

Die Erfindung ist nicht auf die dargestellten Ausführungsformen beschränkt, sondern umfasst alle Varianten und Modifikationen, die in den Rahmen der angeschlossenen Ansprüche fallen.

**Patentansprüche**

1.  Verfahren zum drahtlosen Senden und Empfangen von Nachrichten ($M_i$) in einem asynchronen Ad-hoc-Netzwerk (1) mit einer Mehrzahl von Netzknoten ($N_i$), von denen zumindest ein erster Netzknoten ($N_1$) periodisch Nachrichten ($M_i$) mit einer vorgegebenen

Periodendauer ($P_1$) sendet, **gekennzeichnet durch** die folgenden, in einem zweiten Netzknoten ($N_2$) ausgeführten Schritte:

Festlegen zumindest zweier aufeinanderfolgender Zeitintervalle ($T_m$, $T_{m+1}$) mit jeweils der Länge einer Periodendauer (P), von denen ein erstes Zeitintervall ($T_m$) in der Vergangenheit und ein zweites Zeitintervall ($T_{m+1}$) in der Zukunft liegt, und Unterteilen der Zeitintervalle ($T_m$, $T_{m+1}$) in jeweils zumindest zwei Zeitschlitze ($S_{m,n}$, $S_{m+1,n}$);
Berechnen eines Belegungsmaßes ($B_{m,n}$, $wB_{m,n}$) für jeden Zeitschlitz ($S_{m,n}$) des ersten Zeitintervalls ($T_m$) anhand der Anzahl von in diesem Zeitschlitz empfangenen Nachrichten ($M_k$) eines oder mehrerer anderer Netzknoten ($N_k$);
Ermitteln des Zeitschlitzes ($S_{m,2}$) mit dem geringsten Belegungsmaß ($B_{m,2}$, $wB_{m,2}$) ; und
Senden zumindest einer Nachricht ($M_2$) in einem dem ermittelten Zeitschlitz ($S_{m,n}$) entsprechenden Zeitschlitz ($S_{m+1,n}$) des zweiten Zeitintervalls ($T_{m+1}$).

2. Verfahren nach Anspruch 1, **dadurch gekennzeichnet, dass** die Empfangssignalstärken (R) der empfangenen Nachrichten ($M_k$) gemessen werden und beim Berechnen des Belegungsmaßes ($B_{m,n}$, $wB_{m,n}$) jede empfangene Nachricht ($M_k$) mit ihrer Empfangssignalstärke (R) gewichtet gezählt wird.

3. Verfahren nach Anspruch 1 oder 2, **dadurch gekennzeichnet, dass** die Periodendauer (P) für das ganze Ad-hoc-Netzwerk (1) definiert ist.

4. Verfahren nach Anspruch 1 oder 2, **dadurch gekennzeichnet, dass** die Periodendauer (P) anhand der vom ersten Netzknoten ($N_1$) empfangenen Nachrichten ($M_1$) gemessen wird.

5. Verfahren nach Anspruch 4, **dadurch gekennzeichnet, dass** als erster Netzknoten ($N_1$) jener Netzknoten ($N_1$) des Ad-hoc-Netzwerks (1) gewählt wird, der die geringste Relativgeschwindigkeit zum zweiten Netzknoten ($N_2$) hat.

6. Verfahren nach einem der Ansprüche 1 bis 5, **dadurch gekennzeichnet, dass** die Zeitintervalle ($T_m$, $T_{m+1}$) jeweils in 10 bis 500, bevorzugt 20 bis 100 Zeitschlitze ($S_{m,n}$, $S_{m+1,n}$) unterteilt werden.

7. Verfahren nach einem der Ansprüche 1 bis 6, **dadurch gekennzeichnet, dass** empfangene Nachrichten ($M_k$) mit einem Zeitstempel einer Timing Synchronization Function (10) gemäß dem Standard IEEE 802.11 oder einem damit kompatiblen Standard versehen werden und das Senden von Nachrichten ($M_2$) darauf synchronisiert wird.

8. Verfahren nach einem der Ansprüche 1 bis 7, **dadurch gekennzeichnet, dass** als die genannten periodischen Nachrichten Common Awareness Messages, Basic Safety Messages, Traveler Information Messages und/oder Decentralized Environmental Notification Messages nach dem ITS-G5-, WAVE- oder einem damit kompatiblen Standard gesendet werden.

9. Netzknoten für ein asynchrones Ad-hoc-Netzwerk mit einer Mehrzahl von Netzknoten ($N_1$), von denen zumindest ein Netzknoten ($N_1$) periodisch Nachrichten ($M_1$) mit einer vorgegebenen Periodendauer ($P_1$) sendet, umfassend:

einen Sendeempfänger (7) zum drahtlosen Senden und Empfangen von Nachrichten ($M_k$);
einen mit dem Sendeempfänger (7) verbundenen Prozessor (6), der dafür ausgebildet ist,

- zumindest zwei aufeinanderfolgende Zeitintervalle ($T_m$, $T_{m+1}$) mit jeweils der Länge einer Periodendauer (P) festzulegen, von denen ein erstes Zeitintervall ($T_m$) in der Vergangenheit und ein zweites Zeitintervall ($T_{m+1}$) in der Zukunft liegt, und die Zeitintervalle ($T_m$, $T_{m+1}$) in jeweils zumindest zwei Zeitschlitze ($S_{m,n}$, $S_{m+1,n}$) zu unterteilen,
- ein Belegungsmaß ($B_{m,n}$, $wB_{m,n}$) für jeden Zeitschlitz ($S_{m,n}$) des ersten Zeitintervalls ($T_m$) anhand der Anzahl von in diesem Zeitschlitz ($S_{m,n}$) über den Sendeempfänger (7) empfangenen Nachrichten ($M_k$) eines oder mehrerer anderer Netzknoten ($N_k$) zu berechnen,
- den Zeitschlitz ($S_{m,2}$) mit dem geringsten Belegungsmaß ($B_{m,2}$, $wB_{m,2}$) zu ermitteln, und
- zumindest eine Nachricht ($M_2$) in einem dem ermittelten Zeitschlitz ($S_{m,2}$) entsprechenden Zeitschlitz ($S_{m+1,2}$) des zweiten Zeitintervalls ($T_{m+1}$) über den Sendeempfänger (7) zu senden.

10. Netzknoten nach Anspruch 9, ferner umfassend eine mit dem Prozessor (6) verbundene Messeinrichtung (8) zur Messung der Empfangssignalstärken (R) der empfangenen Nachrichten ($M_k$), wobei der Prozessor (6) dafür ausgebildet ist, beim Berechnen des Belegungsmaßes ($B_{m,n}$, $wB_{m,n}$) jede empfangene Nachricht ($M_k$) mit ihrer Empfangssignalstärke (R) gewichtet zu zählen.

11. Netzknoten nach Anspruch 9 oder 10, **dadurch gekennzeichnet, dass** die Periodendauer (P) für das ganze Ad-hoc-Netzwerk (1) definiert ist.

12. Netzknoten nach Anspruch 9 oder 10, **dadurch ge-**

**kennzeichnet, dass** der Prozessor (6) dafür ausgebildet ist, die Periodendauer (P) anhand der von einem anderen Netzknoten (N$_k$) empfangenen Nachrichten (M$_k$) zu messen.

13. Netzknoten nach Anspruch 12, **dadurch gekennzeichnet, dass** der Prozessor (6) ferner dafür ausgebildet ist, als den genannten anderen Netzknoten (N$_k$) jenen Netzknoten (N$_1$) des Ad-hoc-Netzwerks (1) zu wählen, der die geringste Relativgeschwindigkeit zum Netzknoten (N$_2$) hat.

14. Netzknoten nach einem der Ansprüche 9 bis 13, **dadurch gekennzeichnet, dass** Prozessor (6) dafür ausgebildet ist, die Zeitintervalle (T$_m$, T$_{m+1}$) jeweils in 10 bis 500, bevorzugt 20 bis 100 Zeitschlitze (S$_{m,n}$, S$_{m+1,n}$) zu unterteilen.

15. Netzknoten nach einem der Ansprüche 9 bis 14, **dadurch gekennzeichnet, dass** der Prozessor (6) ferner dafür ausgebildet ist, empfangene Nachrichten (M$_k$) mit einem Zeitstempel einer Timing Synchronization Function (10) gemäß dem Standard IEEE 802.11 oder einem damit kompatiblen Standard zu versehen und das Senden von Nachrichten (M$_2$) darauf zu synchronisieren.

**Claims**

1. A method for the wireless transmission and reception of messages (M$_i$) in an asynchronous ad hoc network (1) having a plurality of network nodes (N$_i$), of which at least a first network node (N$_1$) periodically transmits messages (M$_1$) with a predefined period length (P$_1$), said method being **characterized by** the following steps, which are carried out in a second network node (N$_2$):

   Defining at least two consecutive time intervals (T$_m$, T$_{m+1}$), each of which having the length of one period (P), of which a first time interval (T$_m$) is in the past and a second time interval (T$_{m+1}$) is in the future, and subdividing the time intervals (T$_m$, T$_{m+1}$) into at least two time slots each (S$_{m,n}$, S$_{m+1,n}$) ;
   Calculating an occupancy (B$_{m,n}$, wB$_{m,n}$) for each time slot (S$_{m,n}$) of the first time interval (T$_m$) on the basis of the number of messages (M$_k$) of one or more other network nodes (N$_k$) received in this time slot;
   Identifying the time slot (S$_{m,2}$) having the lowest occupancy (B$_{m,2}$, wB$_{m,2}$); and
   Transmitting at least one message (M$_2$) in a time slot (S$_{m+1,n}$) of the second time interval (T$_{m+1}$) that corresponds to the identified time slot (S$_{m,n}$) .

2. The method according to claim 1, **characterized in that** the received signal strengths (R) of the received messages (M$_k$) are measured and, when calculating the occupancy (B$_{m,n}$, wB$_{m,n}$) , every received message (M$_k$) is counted, being weighted with the received signal strength (R) thereof.

3. The method according to claim 1 or 2, **characterized in that** the period length (P) is defined for the entire ad hoc network (1).

4. The method according to claim 1 or 2, **characterized in that** the period length (P) is measured on the basis of the message (M$_1$) received from the first network node (N$_1$).

5. The method according to claim 4, **characterized in that** the network node selected as the first network node (N$_1$) is the network node (N$_1$) of the ad hoc network (1) that has the lowest relative velocity with respect to the second network node (N$_2$).

6. The method according to any one of the claims 1 to 5, **characterized in that** the time intervals (T$_m$, T$_{m+1}$) are each subdivided into 10 to 500, preferably 20 to 100 time slots (S$_{m,n}$, S$_{m+1,n}$) .

7. The method according to any one of the claims 1 to 6, **characterized in that** received messages (M$_k$) are provided with a time stamp of a Timing Synchronization Function (10) according to the IEEE 802.11 standard or a standard compatible therewith, and the transmission of messages (M$_2$) is synchronized therewith.

8. The method according to any one of the claims 1 to 7, **characterized in that** the aforementioned periodic messages that are transmitted are Common Awareness Messages, Basic Safety Messages, Traveler Information Messages and/or Decentralized Environmental Notification Messages according to the ITS-G5 or WAVE standards or a standard compatible therewith.

9. A network node for an asynchronous ad hoc network having a plurality of network nodes (N$_i$) , at least one network node (N$_1$) of which periodically transmits messages (M$_i$) with a predefined period length (P$_1$), comprising:

   a transceiver (7) for the wireless transmission and reception of messages (M$_k$);
   a processor (6) connected to the transceiver (7), said processor being configured

      - to define at least two consecutive time intervals (T$_m$, T$_{m+1}$), each of which having the length of one period (P), of which a first time

interval ($T_m$) is in the past and a second time interval ($T_{m+1}$) is in the future, and to subdivide the time intervals ($T_m$, $T_{m+1}$) into at least two time slots each ($S_{m,n}$, $S_{m+1,n}$),
- to calculate an occupancy ($B_{m,n}$, $wB_{m,n}$) for each time slot ($S_{m,n}$) of the first time interval ($T_m$) on the basis of the number of messages ($M_k$) of one or more other network nodes ($N_k$) received in this time slot ($S_{m,n}$) via the transceiver (7),
- to identify the time slot ($S_{m,2}$) having the lowest occupancy ($B_{m,2}$, $wB_{m,2}$), and
- to transmit, via the transceiver (7), at least one message ($M_2$) in a time slot ($S_{m+1,2}$) of the second time interval ($T_{m+1}$) corresponding to the identified time interval ($S_{m,2}$) .

10. The network node according to claim 9, further comprising a measuring device (8), which is connected to the processor (6), for measuring the received signal strengths (R) of the received messages ($M_k$), wherein the processor (6) is configured to count every received message ($M_k$), being weighted with the received signal strength (R) thereof, when calculating the occupancy ($B_{m,n}$, $wB_{m,n}$) .

11. The network node according to claim 9 or 10, **characterized in that** the period length (P) is defined for the entire ad hoc network (1).

12. The network node according to claim 9 or 10, **characterized in that** the processor (6) is configured to measure the period length (P) on the basis of the messages ($M_k$) received from another network node ($N_k$).

13. The network node according to claim 12, **characterized in that** the processor (6) is further configured to select that network node ($N_1$) of the ad hoc network (1) as the aforementioned other network node ($N_k$) that has the lowest relative velocity with respect to the network node ($N_2$).

14. The network node according to any one of the claims 9 to 13, **characterized in that** the processor (6) is configured to subdivide each of the time intervals ($T_m$, $T_{m+1}$) into 10 to 500, preferably 20 to 100 time slots ($S_{m,n}$, $S_{m+1,n}$) .

15. The network node according to any one of the claims 9 to 14, **characterized in that** the processor (6) is further configured to provide received messages ($M_k$) with a time stamp of a Timing Synchronization Function (10) according to the IEEE 802.11 standard or a standard compatible therewith, and to synchronize the transmission of messages ($M_2$) therewith.

**Revendications**

1. Procédé d'émission sans fil et de réception sans fil de messages ($M_i$) dans un réseau ad-hoc (1) asynchrone avec une pluralité de noeuds de réseau (Ni), parmi lesquels au moins un premier noeud de réseau ($N_1$) émet périodiquement des messages ($M_1$) avec une période ($P_1$) prédéterminée, **caractérisé par** les étapes suivantes exécutées dans un deuxième noeud de réseau ($N_2$) :

   détermination d'au moins deux intervalles de temps ($T_m$, $T_{m+1}$) consécutifs avec la durée d'une période (P), dont un premier intervalle de temps ($T_m$) se situe respectivement dans le passé et un deuxième intervalle de temps ($T_{m+1}$) se situe respectivement dans l'avenir, et la subdivision des intervalles de temps ($T_m$, $T_{m+1}$) en respectivement au moins deux créneaux de temps ($S_{m,n}$, $S_{m+1,n}$) ;
   calcul d'une mesure de l'occupation ($B_{m,n}$, $wB_{m,n}$) pour chaque créneau de temps ($S_{m,n}$) du premier intervalle de temps ($T_m$) à l'aide du nombre de messages ($M_k$) reçus pendant ce créneau de temps d'un ou de plusieurs autres noeuds de réseau ($N_k$) ;
   identification du créneau de temps ($S_m$,2) avec la mesure de l'occupation minimale ($B_{m,2}$, $wB_{m,2}$) ; et
   émission d'au moins un message ($M_2$) dans un créneau de temps ($S_{m+1,n}$) du deuxième intervalle de temps ($T_{m+1}$) correspondant au créneau de temps identifié ($S_{m,n}$).

2. Procédé selon la revendication 1, **caractérisé en ce que** les puissances des signaux de réception (R) des messages ($M_k$) reçus sont mesurées et que chaque message ($M_k$) reçu est compté pondéré avec sa puissance de signal de réception (R) lors du calcul de la mesure de l'occupation ($B_{m,n}$, $wB_{m,n}$) .

3. Procédé selon la revendication 1 ou 2, **caractérisé en ce que** la période (P) est définie pour tout le réseau ad-hoc (1).

4. Procédé selon la revendication 1 ou 2, **caractérisé en ce que** la période (P) est mesurée à l'aide des messages ($M_1$) reçus du premier noeud de réseau ($N_1$).

5. Procédé selon la revendication 4, **caractérisé en ce que** le noeud de réseau ($N_1$) du réseau ad-hoc (1), qui a la vitesse relative la plus faible par rapport au deuxième noeud de réseau ($N_2$), est choisi en tant que premier noeud de réseau ($N_1$).

6. Procédé selon l'une des revendications 1 à 5, **caractérisé en ce que** les intervalles de temps ($T_m$,

$T_{m+1}$) sont subdivisés chaque fois en 10 à 500, de préférence en 20 à 100, créneaux de temps ($S_{m,n}$, $S_{m+1,n}$).

7. Procédé selon l'une des revendications 1 à 6, **caractérisé en ce que** les messages ($M_k$) reçus sont pourvus d'un « Timing Synchronisation Function » (10) selon la norme standard IEEE 802.11 ou d'une norme standard compatible avec celle-ci et que l'émission des messages ($M_2$) est synchronisée avec celui-ci.

8. Procédé selon l'une des revendications 1 à 7, **caractérisé en ce que**, en tant que lesdits messages périodiques, des messages « Common Awareness Messages », « Basic Safety Messages », « Traveller Information Messages » et/ou « Decentralized Environmental Notification Messages » sont émis selon la norme standard ITS-G5, WAVE ou d'une norme standard compatible avec ceux-ci.

9. Noeud de réseau pour un réseau ad-hoc asynchrone avec une pluralité de noeuds de réseaux (Ni), parmi lesquels au moins un noeud de réseau ($N_1$) émet périodiquement des messages ($M_1$) avec une période ($P_1$) prédéterminée, comprenant :

   un émetteur-récepteur (7) pour l'émission sans fil et la réception sans fil de messages ($M_k$) ;
   un processeur (6), relié avec l'émetteur-récepteur (7), qui est conçu pour

   - identifier au moins deux intervalles de temps ($T_m$, $T_{m+1}$) consécutifs avec, chaque fois, la durée d'une période (P), dont un premier intervalle de temps ($T_m$) se situe respectivement dans le passé et un deuxième intervalle de temps ($T_{m+1}$) se situe respectivement dans l'avenir, et subdiviser les intervalles de temps ($T_m$, $T_{m+1}$) en respectivement au moins deux créneaux de temps ($S_{m,n}$, $S_{m+1,n}$),
   - calculer une mesure de l'occupation ($B_{m,n}$, $wB_{m,n}$) pour chaque créneau de temps ($S_{m,n}$) du premier intervalle de temps ($T_m$) à l'aide du nombre de messages ($M_k$) reçus pendant ce créneau de temps ($S_{m,n}$) par l'intermédiaire de l'émetteur-récepteur d'un ou de plusieurs autres noeuds de réseau ($N_k$),
   - identifier le créneau de temps ($S_{m,n}$) avec la mesure de l'occupation ($B_{m,2}$, $wB_{m,2}$) minimale, et
   - émettre au moins un message ($M_2$) dans un créneau de temps ($S_{m+1,n}$) du deuxième intervalle de temps ($T_{m+1}$) correspondant au créneau de temps ($S_{m,2}$) identifié par l'intermédiaire de l'émetteur-récepteur (7).

10. Noeud de réseau selon la revendication 9, comprenant en outre un système de mesure (8) relié au processeur (6) pour la mesure des puissances des signaux d'émission (R) des messages ($M_k$) reçus, le processeur (6) étant conçu pour compter chaque message ($M_k$) reçu pondéré avec sa puissance de signal de réception (R) lors du calcul de la mesure de l'occupation ($B_{m,n}$, $wB_{m,n}$).

11. Noeud de réseau selon la revendication 9 ou 10, **caractérisé en ce que** la période (P) est définie pour tout le réseau ad-hoc (1).

12. Noeud de réseau selon les revendications 9 ou 10, **caractérisé en ce que** le processeur (6) est conçu pour mesurer la période (P) à l'aide des messages ($M_k$) reçus à partir d'un autre noeud de réseau ($N_k$).

13. Noeud de réseau selon la revendication 12, **caractérisé en ce que** le processeur (6) est en outre conçu pour choisir le noeud de réseau ($N_1$) du réseau ad-hoc (1) en tant que ledit autre noeud de réseau ($N_k$) qui a la vitesse relative la plus faible par rapport au noeud de réseau ($N_2$).

14. Noeud de réseau selon l'une des revendications 9 à 13, **caractérisé en ce que** le processeur (6) est conçu pour subdiviser les intervalles de temps ($T_m$, $T_{m+1}$) chaque fois en 10 à 500, de préférence en 20 à 100, créneaux de temps ($S_{m,n}$, $S_{m+1,n}$).

15. Noeud de réseau selon l'une des revendications 9 à 14, **caractérisé en ce que** le processeur (6) est en outre conçu pour munir des messages ($M_k$) reçus avec un horodatage d'une « Timing Synchronization Function » (10) selon la norme standard IEEE 802.11, ou d'une norme standard compatible avec celle-ci, et pour synchroniser l'émission des messages ($M_k$) avec celui-ci.

*Fig. 1*

EP 2 849 522 B1

*Fig. 2a*

*Fig. 2b*

N₂

6

15

M₂

CAM/
BSM

APP

14

13

16

12

DCC

MAC

11

TSF

10

17

PHY

8

7

*Fig. 3*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **G. BANSAL et al.** Cross-Validation of DSRC Radio Testbed and NS-2 Simulation Platform for Vehicular Safety Communications. *IEEE Vehicular Technology Conference (VTC Fall),* 2011
- **S. SUNDAR et al.** Congestion Control for Vehicular Safety: Synchronous and Asynchronous MAC Algorithms. *VANET'12 Conference,* 25. Juni 2012

- Collision Control of Periodic Safety Messages with Strict Messaging Frequency Requirements. **Y. PARK et al.** IEEE Transactions on Vehicular Technology. IEEE, 02. Februar 2013, vol. 62